# EUROPEAN PATENT SPECIFICATION

(11) **EP 3 868 675 B1**
(45) Date of publication and mention of the grant of the patent: **09.07.2025**
(21) Application number: 21156600.5
(22) Date of filing: 11.02.2021
(51) Int. Cl.: B65B 35/38, B65B 5/06

(54) **SUCTION AND TRANSPORT DEVICE**
SAUG- UND TRANSPORTVORRICHTUNG
DISPOSITIF D'ASPIRATION ET DE TRANSPORT

(30) Priority: 20.02.2020 JP 2020027493
(43) Date of publication of application: 25.08.2021
(73) Proprietor: ISHIDA CO., Ltd., Kyoto-shi, Kyoto 606-8392 (JP)
(72) Inventor: IWASA, Takuya, Ritto-shi, Shiga, 520-3026 (JP); TSUNAJIMA, Kazuya, Ritto-shi, Shiga, 520-3026 (JP); YOKOTA, Yuji, Ritto-shi, Shiga, 520-3026 (JP)
(74) Representative: Bardehle Pagenberg Partnerschaft mbB Patentanwälte Rechtsanwälte

(56) References cited:
- WO-A1-95/05312
- CN-B- 105 668 235
- US-A1- 2008 072 549

## Description

### TECHNICAL FIELD

This invention relates to a suction and transport device.

### BACKGROUND ART

Conventionally, as disclosed in patent document 1 (JP-A No. 2018-89732), suction and transport devices that suck and hold products and perform box packing have been known. The suction and transport devices suck plural products in postures in which the plural products partially overlap each other. Because of this, the spacing between the plural products is reduced, so the products are inhibited from contacting the inner surfaces of the boxes.

US patent application US 2008/072549 A1 discloses a device for packaging bags in a box comprising a bag supplying device for supplying bags to a pickup position, as well as a transfer device provided with at least one nozzle for moving at least one bag from a pickup position to a depositing position. The device further comprising a flap which is movable from a closed position to an open position and vice versa, under which flap a box can be positioned. The flap is positioned opposite the pickup position in such a manner that a bag can be dragged from the pickup position to the depositing position on the flap in use, during which dragging at least a part of the bottom side of said bag is substantially constantly supported on the pickup position or on the flap.

### SUMMARY OF THE INVENTION

### Technical Problem

However, the present inventor found, based on various considerations, that when the suction and transport device sucks and transports plural products, in a case where each of the plural products lacks flexibility, there arises a state in which the plural products are not sucked and transported in preferred postures. In such a state, there is the concern that the plural products will not be properly box packed.

It is an object of the present invention to provide a suction and transport device that, even in a case where products lack flexibility, can suck and transport plural products in preferred postures.

### Solution to Problem

A suction and transport device pertaining to a first aspect of the invention for sucking and transporting a first product, and includes a suction component connected to a vacuum source, a first suction member and a support member. The first suction member has one end that is joined to the suction component and another end that serves as a sucking portion for sucking the first product. The support member has an abutting portion for being suitable for abutting the first product. When the first suction member is sucking the first product and the abutting portion is abutting the first product, the height of the sucking portion is higher than the height of the abutting portion in the vertical direction.

In the suction and transport device of the first aspect, the suction and transport device includes the support member, and the abutting portion of the support member abuts the first product. Furthermore, when the sucking portion is sucking the first product and the abutting portion is abutting the first product, the height of the sucking portion is higher than the height of the abutting portion in the vertical direction. Because of this, when the suction and transport device sucks and transports plural products, the posture of the first product being sucked by the sucking portion of the first suction member can be kept in a preferred posture.

A suction and transport device pertaining to a second aspect of the invention is the suction and transport device pertaining to the first aspect, wherein the height of the sucking portion when the sucking portion is not sucking the first product is a height equal to or greater than the height of the abutting portion in the vertical direction.

In the suction and transport device of the second aspect, the height of the sucking portion when the sucking portion is not sucking the first product is a height equal to or greater than the height of the abutting portion in the vertical direction. Because of this, when the suction and transport device sucks and transports plural products, the posture of the first product being sucked by the sucking portion of the first suction member can be kept in a preferred posture.

A suction and transport device pertaining to a third aspect of the invention is the suction and transport device pertaining to the first aspect or the second aspect, further including a position adjusting portion for changing the height of the abutting portion.

The abutting portion, by abutting the first product, keeps stable the posture of the first product being sucked by the sucking portion. At this time, depending on the height of the abutting portion, there is the concern that the first product will sustain damage, so it is preferred that the height of the abutting portion be appropriately adjustable.

In the suction and transport device of the third aspect, the suction and transport device further includes the position adjusting portion for changing the height of the abutting portion. Because of this, the height of the abutting portion can be adjusted in accordance with the posture and shape of the first product, so damage to the first product can be inhibited.

A suction and transport device pertaining to a fourth aspect of the invention is the suction and transport device pertaining to any of the first aspect to the third aspect, wherein the support member is relocatable in a range in which the first product can abut it.

The abutting portion of the support member, by abutting the first product, keeps stable the posture of the first product being sucked by the sucking portion. At this time, depending on the position at which the support member is joined to the suction component, there is the concern that the first product will sustain damage, so it is preferred that the position of the support member be appropriately adjustable.

In the suction and transport device of the fourth aspect, the support member is relocatable in a range in which the first product can abut it. Because of this, the position of the support member can be adjusted in accordance with the posture and shape of the first product, so damage to the first product can be inhibited.

A suction and transport device pertaining to a fifth aspect of the invention is the suction and transport device pertaining to any of the first aspect to the fourth aspect, wherein the abutting portion is suitable for elastically deforming when it abuts the first product.

The abutting portion, by abutting the first product, keeps stable the posture of the first product being sucked by the sucking portion. For this reason, depending on the material of the abutting portion, there is the concern that the first product will sustain damage.

In the suction and transport device of the fifth aspect, the abutting portion is suitable for elastically deforming when it abuts the first product. Because of this, when the abutting portion abuts the first product, damage to the first product can be inhibited.

A suction and transport device pertaining to a sixth aspect of the invention is the suction and transport device pertaining to any of the first aspect to the fifth aspect, wherein the abutting portion is an elastic member made of rubber or made of Bancollan.

The abutting portion, by abutting the first product, keeps stable the posture of the first product being sucked by the sucking portion. For this reason, depending on the material of the abutting portion, there is the concern that the first product will sustain damage.

In the suction and transport device of the sixth aspect, the abutting portion is made of rubber or made of Bancollan. Because of this, the abutting portion has elasticity and flexibility, so when it abuts the first product, damage to the first product can be inhibited.

A suction and transport device pertaining to a seventh aspect of the invention is the suction and transport device pertaining to any of the first aspect to the sixth aspect, wherein the area of the abutting portion is larger than the area of the sucking portion.

In the suction and transport device of the seventh aspect, the area of the abutting portion is larger than the area of the sucking portion. Because of this, when the suction and transport device sucks and transports plural products, the posture of the first product being sucked by the sucking portion of the first suction member can be kept in a preferred posture.

A suction and transport device pertaining to an eighth aspect of the invention is the suction and transport device pertaining to any of the first aspect to the seventh aspect, wherein the support member is not configured to suck and hold the first product.

In the suction and transport device of the eighth aspect, the support member is not configured to suck and hold the first product. In other words, the support member does not have a mechanism for sucking and holding the first product. Because of this, an increase in the cost of the suction and transport device including the support member can be inhibited.

A suction and transport device pertaining to a ninth aspect of the invention is the suction and transport device pertaining to any of the first aspect to the eighth aspect, further including a second suction member having one end that is joined to the suction component and another end for sucking a second product. Before the sucking portion of the first suction member and the another end of the second suction member suck the first product and the second product, the first product and the second product are in contact with each other in mutually different postures.

In the suction and transport device of the ninth aspect, the suction and transport device further includes the second suction member having one end that is joined to the suction component and another end for sucking the second product. Furthermore, before the sucking portion of the first suction member and the another end of the second suction member suck the first product and the second product, the first product and the second product are in contact with each other in mutually different postures. In this way, even in a case where the suction and transport device sucks and transports the first product and the second product, the posture of the first product being sucked by the sucking portion of the first suction member can be kept in a preferred posture.

A suction and transport device pertaining to a tenth aspect of the invention is the suction and transport device pertaining to the ninth aspect, wherein the suction and transport device is suitable for transporting the first product and the second product to a container.

### Advantageous Effects of Invention

The suction and transport device pertaining to the invention, by virtue of including the abutting portion, can suck products in preferred postures even in a case where the products lack flexibility.

### BRIEF DESCRIPTION OF DRAWINGS

FIG. 1 is a schematic view of a box packing device in which a suction and transport device pertaining to the invention is installed;
FIG. 2 is a schematic view of the internal configuration of the box packing device;
FIG. 3 is a schematic perspective view of the suction and transport device pertaining to the invention;
FIG. 4 is a schematic view showing predetermined postures of products pertaining to the invention;
FIG. 5 is a schematic view showing the suction and transport device pertaining to the invention standing by;
FIG. 6 is a schematic view showing the suction and transport device pertaining to the invention sucking the products;
FIG. 7 is a schematic view showing the suction and transport device pertaining to the invention sucking the products;
FIG. 8 is a schematic view showing the suction and transport device pertaining to the invention sucking and transporting the products;
FIG. 9A is a schematic view showing pressure applied to products in the prior art;
FIG. 9B is a schematic view showing pressure applied to the products in the prior art;
FIG. 9C is a schematic view showing pressure applied to the products in the prior art;
FIG. 9D is a schematic view showing predetermined postures of the products giving way in the prior art;
FIG. 10 is a schematic view showing pressure applied to the products in the suction and transport device pertaining to the invention;
FIG. 11A is a schematic view showing pressure applied to the products in the prior art;
FIG. 11B is a schematic view showing pressure applied to the products in the prior art;
FIG. 11C is a schematic view showing pressure applied to the products in the prior art;
FIG. 11D is a schematic view showing pressure applied to the products in the prior art;
FIG. 11E is a schematic view showing the predetermined postures of the products giving way in the prior art; and
FIG. 12 is a schematic view showing pressure applied to the products in the suction and transport device pertaining to the invention.

### DETAILED DESCRIPTION

A suction and transport device 1 pertaining to an embodiment of the invention will be described below with reference to the drawings.

Furthermore, in the following description, expressions such as "horizontal" and "vertical" are sometimes used to describe directions and positional relationships, and these expressions include not only cases where the things they describe are strictly horizontal, vertical, etc. but also cases where the things they describe are substantially horizontal, vertical, etc.

### (1) Overall Configuration of Suction and Transport Device

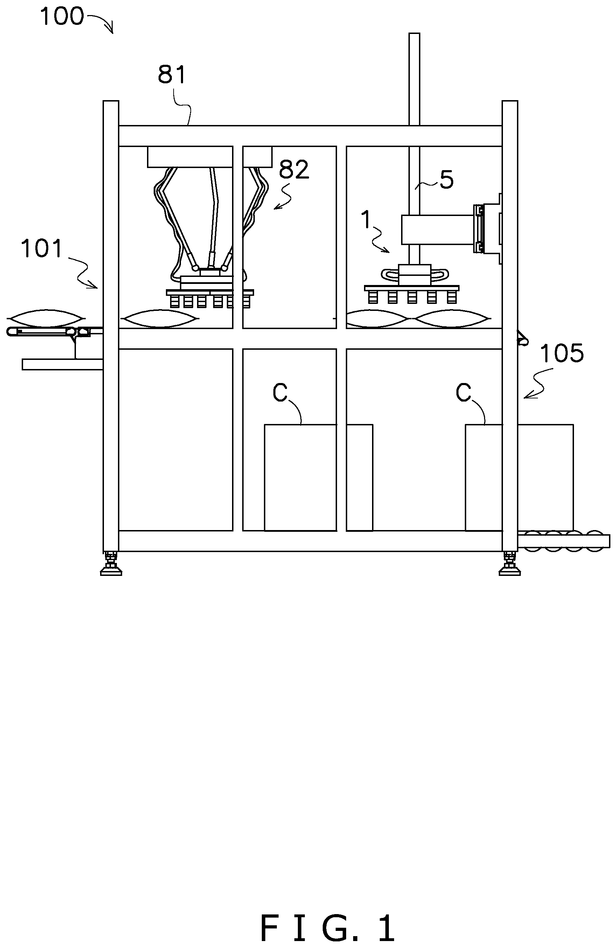

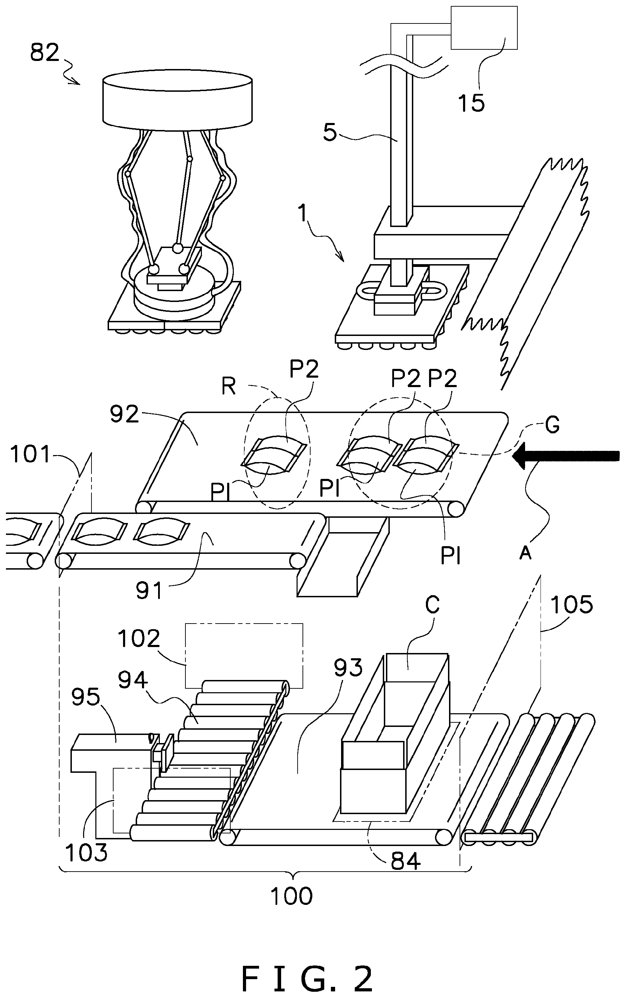

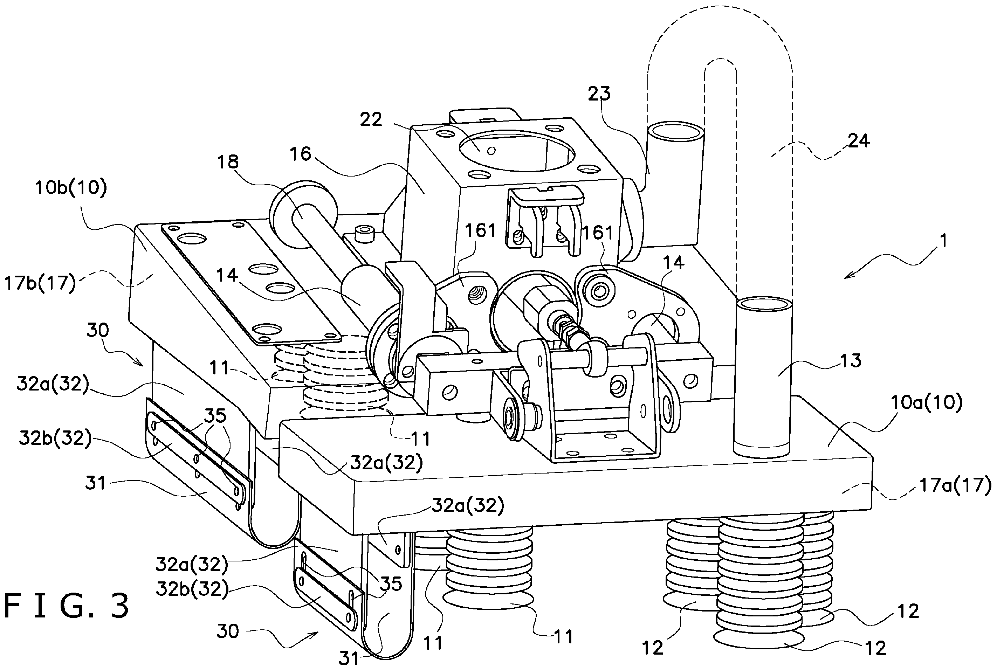

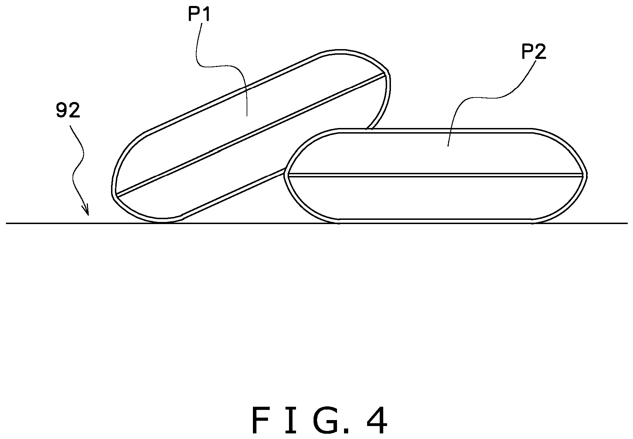

The suction and transport device 1 pertaining to the embodiment of the invention will now be described with reference to the drawings. FIG. 1 and FIG. 2 are schematic views of a box packing device 100 in which the suction and transport device 1 pertaining to the embodiment of the invention is installed. FIG. 3 is a schematic perspective view of the suction and transport device 1 pertaining to the embodiment of the invention. FIG. 4 is a schematic view when a first product P1 and a second product P2 to be sucked and transported by the suction and transport device 1 are seen from the direction of arrow A in FIG. 2.

The box packing device 100 is for putting plural products into single containers C. The box packing device 100 has a frame 81 to which are attached a parallel link robot 82, which consolidates the plural products in one place, and the suction and transport device 1, which sucks and holds the plural products that have been consolidated and transports them to the containers C.

A first conveyor 91 conveys, one at a time, the products which have been introduced from a product inlet 101. The parallel link robot 82 picks up two products on the first conveyor 91 and places a row R comprising the two products on a second conveyor 92. Hereinafter, the products that have been rearranged in the row R by the parallel link robot 82 will be called a first product P1 and a second product P2. Though this is not intended to be limiting, the first product P1 and the second product P2 are products to whose surfaces a paper lamination has been applied, and are bag-like products filled with a snack food such as potato chips. In other words, the first product P1 and the second product P2 are products that lack flexibility. The parallel link robot 82 rearranges the first product P1 and the second product P2 so that the first product P1 and the second product P2 contact each other in mutually different postures. It will be noted that "mutually different postures" specifically means postures where the first product P1 slopes and part of the first product P1 overlaps and shown in the drawings, the suction component 10 has an actuator, and when the actuator acts, the first suction component 10a and the second suction component 10b are movable toward and away from each other.

The first suction component 10a and the second suction component 10b have negative pressure chambers 17. Hereinafter, the negative pressure chamber that the first suction component 10a has will be called a first negative pressure chamber 17a, and the negative pressure chamber that the second suction component 10b has will be called a second negative pressure chamber 17b. The first negative pressure chamber 17a and the second negative pressure chamber 17b are connected to a vacuum source 15.

Specifically, the second negative pressure chamber 17b is communicated to the attachment component 16, which is airtightly coupled to the lower end portion of the robot arm 5, and a hole 22 formed in the upper surface of the attachment component 16 is connected to a negative pressure duct housed inside the robot arm 5. The negative pressure duct is connected to the vacuum source 15, which is a suction blower or a vacuum pump for example, and negative pressure acts on the inside of the second negative pressure chamber 17b via the attachment component 16. Furthermore, an elbow 23 that rotates at its attachment surface is attached to the attachment component 16, and the elbow 23 is connected via a flexible hose 24 to a pipe 13 of the first suction component 10a. Consequently, the negative pressure inside the attachment component 16 acts via the flexible hose 24 on the first negative pressure chamber 17a in the first suction component 10a. In this way, because the negative pressure chambers 17a, 17b are connected to the vacuum source 15, the first suction members 11 and the second suction members 12 can suck the first products P1 and the second products P2.

It will be noted that the first suction component 10a and the second suction component 10b in this embodiment are made of aluminum from the standpoint of weight reduction, though this is not intended to be limiting.

### (2-2) First Suction Members 11

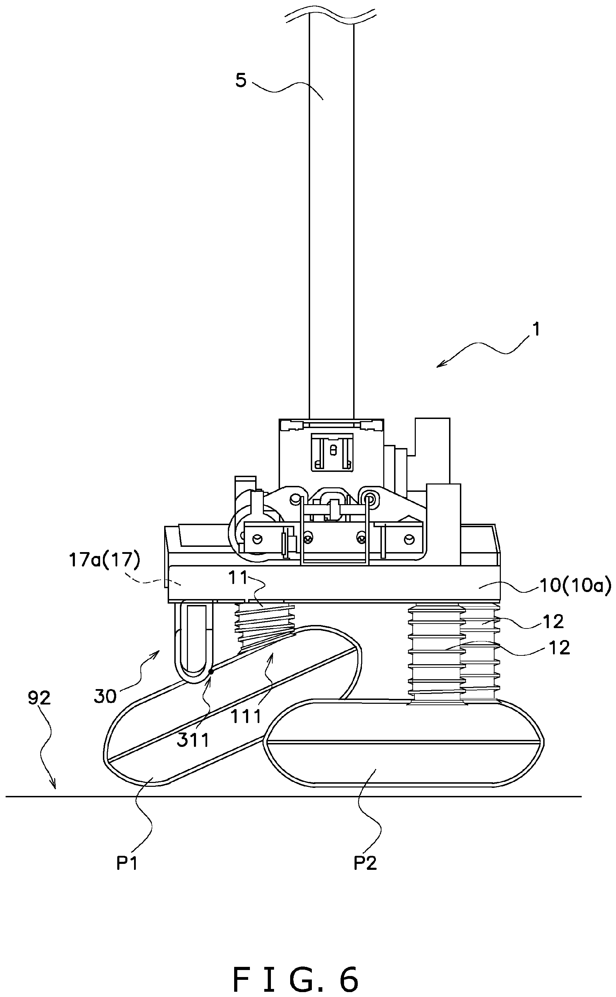

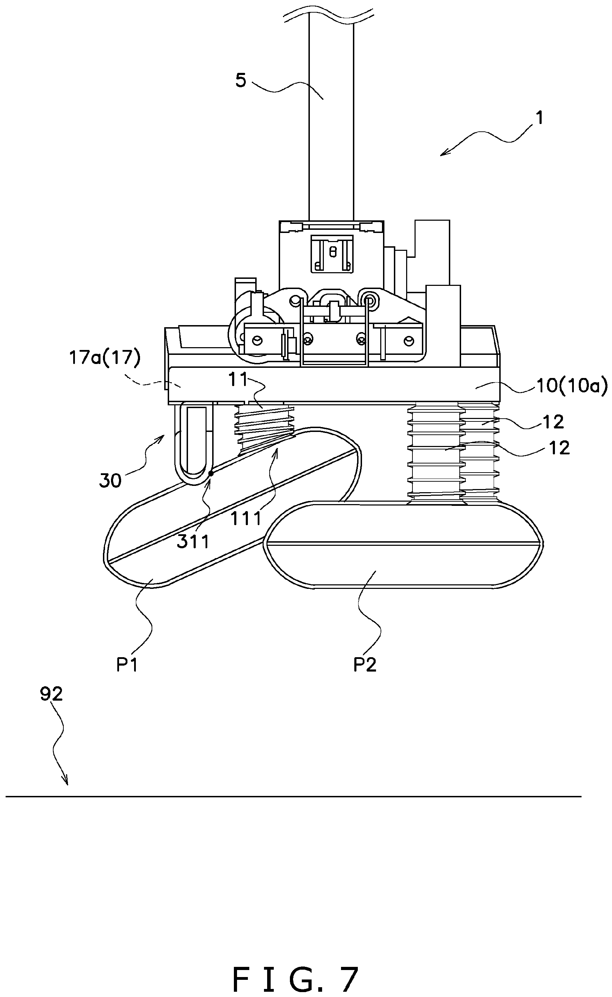

The first suction members 11 are joined to the suction component 10 and suck the first products P1. Specifically, the first suction members 11 each have one end that is joined to the first suction component 10a or the second suction component 10b and another end that serves as a sucking portion 111 that sucks the first products P1. As shown in FIG. 3, the first suction members 11 in this embodiment are tubular extending/contracting members comprising bellows-like hoses, and are attached two each to each of the first suction component 10a and the second suction component 10b. The first suction component 10a sucks one first product P1 with its two first suction members 11. Likewise, the second suction component 10b sucks one first product P1 with its two first suction members 11. It will be noted that the quantity, shape, and material of the first suction members 11 may be appropriately changed in accordance with the quantity, shape, material, and posture of the first products P1. The first suction members 11 suck the first products P1 as a result of the insides of the first suction members 11 being put in a vacuum state by the negative pressure chambers 17. Suction surfaces of the first suction members 11 that suck the first products P1 are the sucking portions 111. When the sucking portions 111 are not sucking the first products P1, the height of the sucking portions 111 is a height equal to or greater than the height of later-described abutting portions 311 in the vertical direction. Furthermore, as shown in FIG. 6 and FIG. 7, when the sucking portions 111 are sucking the first products P1 and the abutting portions 311 are abutting the first products P1, the height of the sucking portions 111 is higher than the height of the abutting portions 311 in the vertical direction.

### (2-3) Second Suction Members 12

The second suction members 12 are joined to the suction component 10 and suck the second products P2. Specifically, the second suction members 12 each have one end that is joined to the first suction component 10a or the second suction component 10b and another end that sucks the second products P2. It will be noted that in this embodiment the another ends of the second suction members 12 are the lower ends of the second suction members 12 in the vertical direction. As shown in FIG. 3, the second suction members 12 in this embodiment are tubular extending/contracting members comprising bellows-like hoses, and are attached three each to each of the first suction component 10a and the second suction component 10b. The first suction component 10a sucks one second product P2 with its three second suction members 12. Likewise, the second suction component 10b sucks one second product P2 with its three second suction members 12. It will be noted that the quantity, shape, and material of the second suction members 12 may be appropriately changed in accordance with the quantity, shape, material, and posture of the second products P2. The second suction members 12 suck the second products P2 as a result of the insides of the second suction members 12 being put in a vacuum state by the negative pressure chambers 17. As shown in FIG. 6 to FIG. 8, in this embodiment the height of the another ends (lower ends) of the second suction members 12 is lower than the height of the sucking portions 111 of the first suction members 11 in the vertical direction.

### (2-4) Support Members 30

As shown in FIG. 3, in this embodiment the first suction component 10a and the second suction component 10b are each coupled to one support member 30.

The support members 30 have abutting portions 311 that abut the first products P1. Specifically, the support members 30 comprise abutment members 31 and support portions 32 that couple the abutment members 31 to the suction component 10, and the abutment members 31 have the abutting portions 311 that abut the first products P1. Abutment surfaces of the abutment members 31 that abut the first products P1 are the abutting portions 311. For this reason, the position of the abutting portions 311 appropriately changes in accordance with the posture and shape of the first products P1.

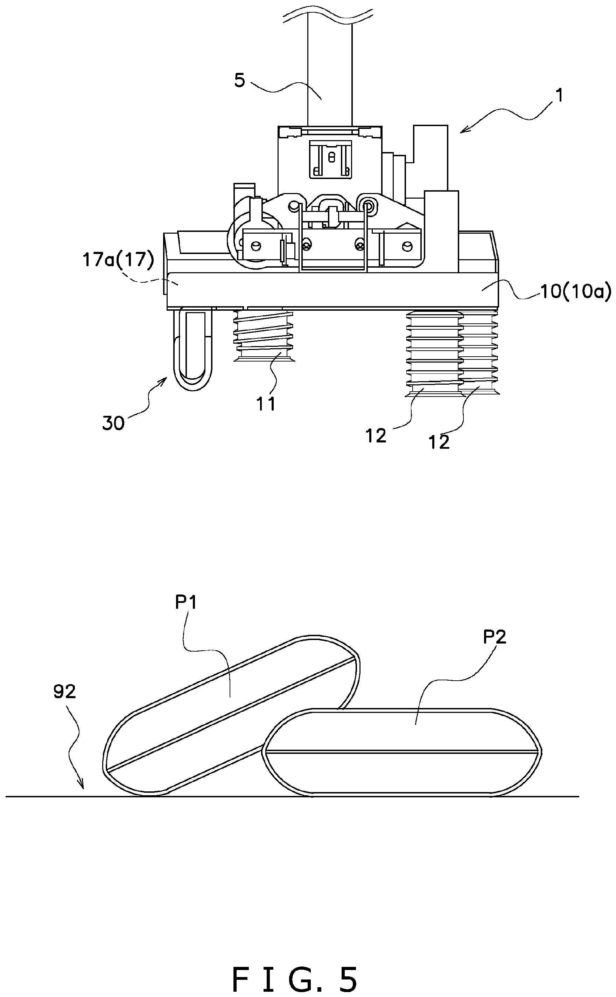

The abutment members 31 are configured by a material having elasticity and flexibility in order to mitigate shock when the abutting portions 311 abut the first products P1. The abutment members 31 are, for example, made of rubber or made of Bancollan. Likewise, the abutting portions 311 are made of rubber or made of Bancollan. For this reason, when the abutting portions 311 abut the first products P1, the abutting portions 311 elastically deform. In this embodiment, the abutment members 31 comprise a tabular sheet made of rubber or made of Bancollan secured in a curved shape, and are substantially J-shaped or substantially U-shaped in side view as shown in FIGS. 3 and 5. It will be noted that the shape of the abutment members 31 may be appropriately changed in accordance with the posture and shape of the first products P1.

The abutment members 31 have position adjusting portions 35. The position adjusting portions 35 are long holes formed extending in the vertical direction such as shown in FIG. 3 for example. Because the abutment members 31 have the position adjusting portions 35, the height of the lower ends of the abutment members 31 in the vertical direction can be adjusted in accordance with the shape and posture of the first products P1. In other words, the height of the abutting portions 311 in the vertical direction can be changed in accordance with the shape and posture of the first products P1.

The support portions 32 of the support members 30 couple the abutment members 31 to the first suction component 10a and the second suction component 10b. As shown in FIG. 3, the support portions 32 have first support portions 32a and second support portions 32b. The first support portions 32a couple, with screws for example, the abutment members 31 to the first suction component 10a and the second suction component 10b, respectively. The second support portions 32b fulfill the role of washers when securing, with screws for example, the abutment members 31 to the first support portions 32a. In this embodiment, the support members 30 comprise the abutment members 31 and the support portions 32, and the positions at which the support portions 32 couple the abutment members 31 to the first suction component 10a and the second suction component 10b respectively can be appropriately changed in accordance with the posture and shape of the first products P1. In other words, the support members 30 are relocatable in a range in which the first products P1 can abut them.

It will be noted that the support members 30 do not suck and hold the first products P1. In other words, the support members 30 do not have a suction mechanism as do the first suction members 11 and the second suction members 12.

### (3) Operation of Suction and Transport Device 1

As described above, the suction and transport device 1 is a device installed in the box packing device 100, and is a device that sucks and holds, with the first suction component 10a and the second suction component 10b, the product groups G flowing on the second conveyor 92 and transports the product groups G to the containers C. The product groups G are each configured by two first products P1 and two second products P2.

Below, the suction and transport operation of the suction and transport device 1 will be described with reference to FIG. 4 to FIG. 8, taking the first suction component 10a as an example. It will be noted that FIG. 4 to FIG. 8 are drawings in which the suction and transport device 1, a first product P1, and a second product P2 are seen from the direction of arrow A in FIG. 2. For this reason, in FIG. 4 to FIG. 8, illustration of some configurations of the suction and transport device 1 is omitted.

It will be noted that the suction and transport operation of the second suction component 10b is generally the same as the suction and transport operation of the first suction component 10a, so description thereof is omitted here.

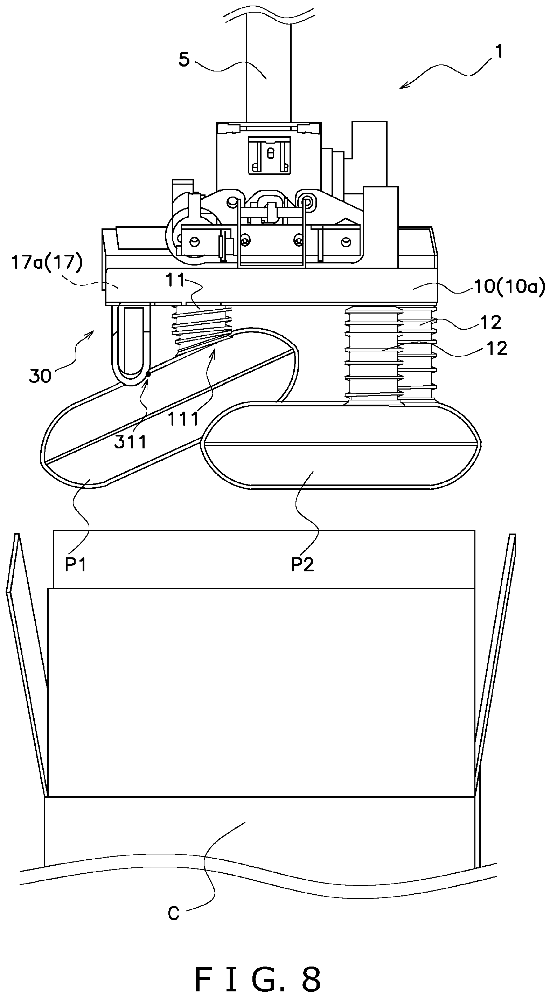

The first product P1 and the second product P2 that have been rearranged in the predetermined postures such as shown in FIG. 4 by the parallel link robot 82 are conveyed by the second conveyor 92 to the vertical direction underside of the first suction component 10a. The first suction component 10a of the suction and transport device 1 is coupled to the robot arm 5 via the second suction component 10b and can freely move in the horizontal direction and the vertical direction. As shown in FIG. 5 and FIG. 6, when the first product P1 and the second product P2 reach the vertical direction underside of the first suction component 10a, the robot arm 5 moves the first suction component 10a downward in the vertical direction. At this time, negative pressure is supplied to the internal spaces of the first suction members 11 and the second suction members 12 of the first suction component 10a. As shown in FIG. 6, the movement of the first suction component 10a downward in the vertical direction by the robot arm 5 is carried out so that the timing when the first suction members 11 abut the first product P1 and the timing when the second suction members 12 abut the second product P2 are generally simultaneous. As shown in FIG. 6, when the sucking portions 111 of the first suction members 11 abut the upper surface of the first product P1, the first product P1 is sucked by the first suction members 11 whose internal spaces are supplied with the negative pressure. Likewise, when the another ends (lower ends) of the second suction members 12 abut the upper surface of the second product P2, the second product P2 is sucked by the second suction members 12 whose internal spaces are supplied with the negative pressure. The abutting portion 311 of the support member 30 abuts the first product P1 at a timing simultaneous with, or slightly later than, the timing when the sucking portions 111 abut the first product P1. When the first suction members 11 and the second suction members 12 suck the first product P1 and the second product P2, as shown in FIG. 7, the robot arm 5 raises the first suction component 10a. As shown in FIG. 6 and FIG. 7, when the sucking portions 111 of the first suction members 11 are sucking the first product P1 and the abutting portion 311 is abutting the first product P1, the height of the sucking portions 111 is higher than the height of the abutting portion 311 in the vertical direction. As shown in FIG. 8, the robot arm 5 that has raised the first suction component 10a and picked up the first product P1 and the second product P2 from the second conveyor 92 moves the first suction component 10a and transports the first product P1 and the second product P2 to the container C. During this transport, the internal spaces of the first suction members 11 and the second suction members 12 continue to be supplied with the negative pressure. Furthermore, during this transport, the abutting portion 311 continues to abut the first product P1. In this way, the suction and transport device 1 sucks and transports the first product P1 and the second product P2 while maintaining the predetermined postures of the first product P1 and the second product P2.

It will be noted that it is preferred that the area of the abutting portion 311 be larger than the area of the sucking portions 111. Here, "area of the sucking portions 111" means the sum total of the areas of each of the sucking portions 111. Because the abutting portion 311 abuts the first product P1 in a larger area than the sum total of the areas of each of the sucking portions 111, the posture of the first product P1 being sucked by the sucking portions 111 can more reliably be kept stable.

### (4) Function of Support Members 30

Conventionally, devices that use a robot arm to suck and transport plural products to a container have been known. Such devices, in the case of sucking and transporting plural products flowing on a conveyor in postures (predetermined postures) such as shown in FIG. 4, transport the plural products to the container while maintaining the predetermined postures of the plural products.

In a case where the plural products that are sucked and transported by the above devices are products that have been packaged in a soft packaging material such as plastic film and have flexibility, even if some kind of pressure acts on the products, part of any product of the plural products deforms by, for example, yielding, so the predetermined postures of the plural products are generally maintained. However, in a case where the plural products are, for example, products to which a paper lamination has been applied and lack flexibility, there is the concern that the suction and transport will be carried out in a state in which the predetermined postures of the plural products are not maintained.

### (4-1) Case of Suction and Transport Device 1X pertaining to Prior Art: Part 1

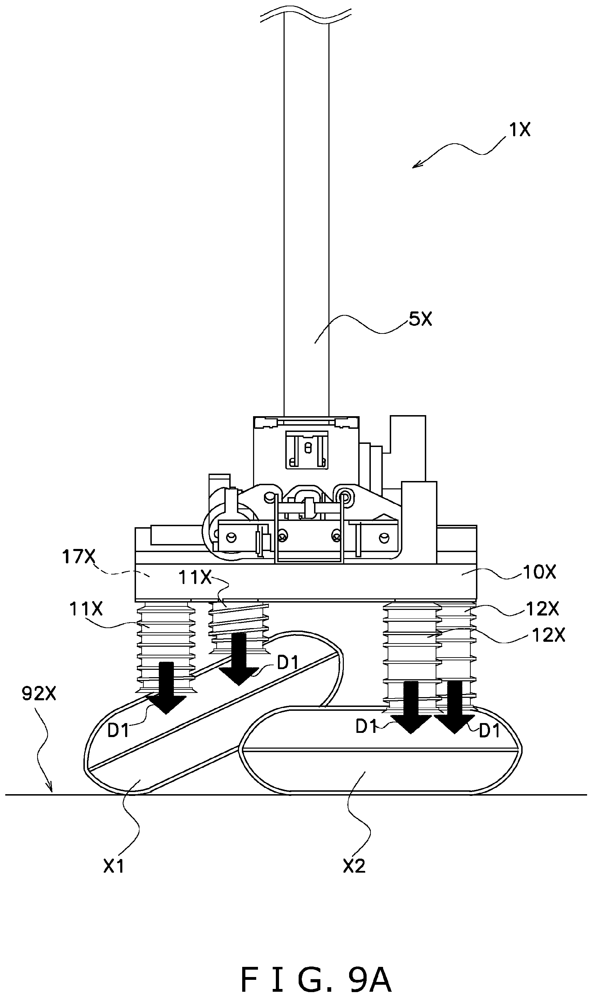

For example, there is a suction and transport device 1X that includes a suction component 10X, first suction members 11X, and second suction members 12X such as shown in FIG. 9A to FIG. 9D. The suction and transport device 1X is a device that sucks and transports, to a container (not shown in the drawings), a first product X1 and a second product X2 that have been rearranged in predetermined postures by a parallel link robot (not shown in the drawings). The suction component 10X of the suction and transport device 1X is coupled to a robot arm 5X and can freely move in the horizontal direction and the vertical direction. Furthermore, the suction component 10X has a negative pressure chamber 17X connected to a vacuum source not shown in the drawings, and is capable of supplying negative pressure to the internal spaces of the first suction members 11X and the second suction members 12X. The first product X1 and the second product X2 that have been rearranged in the predetermined postures by the parallel link robot are conveyed by a conveyor 92X. It will be noted that the first product X1 and the second product X2 are products to whose surfaces a paper lamination has been applied, and are bag-like products filled with a snack food such as potato chips. In other words, the first product X1 and the second product X2 are products that lack flexibility.

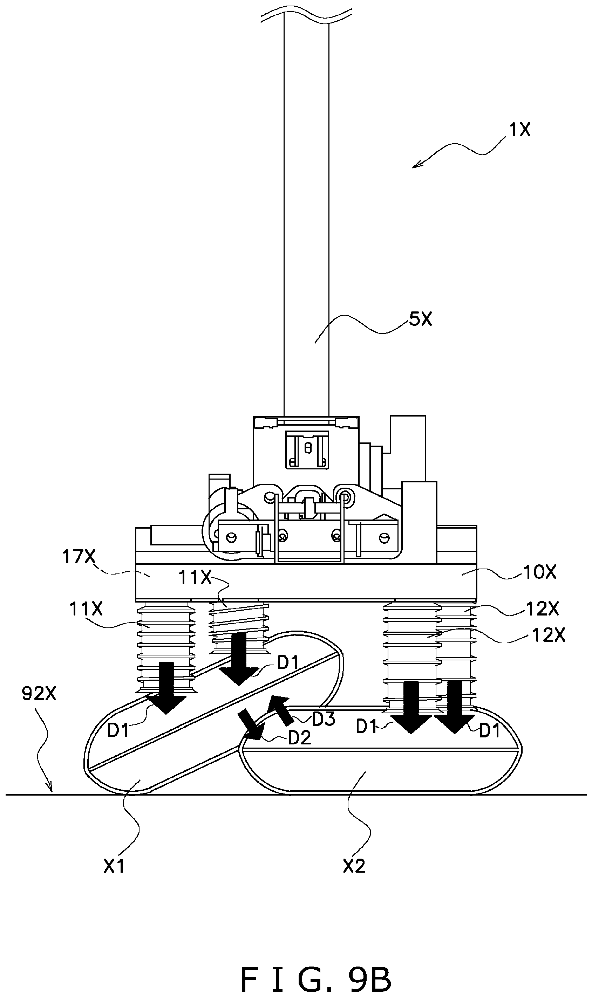

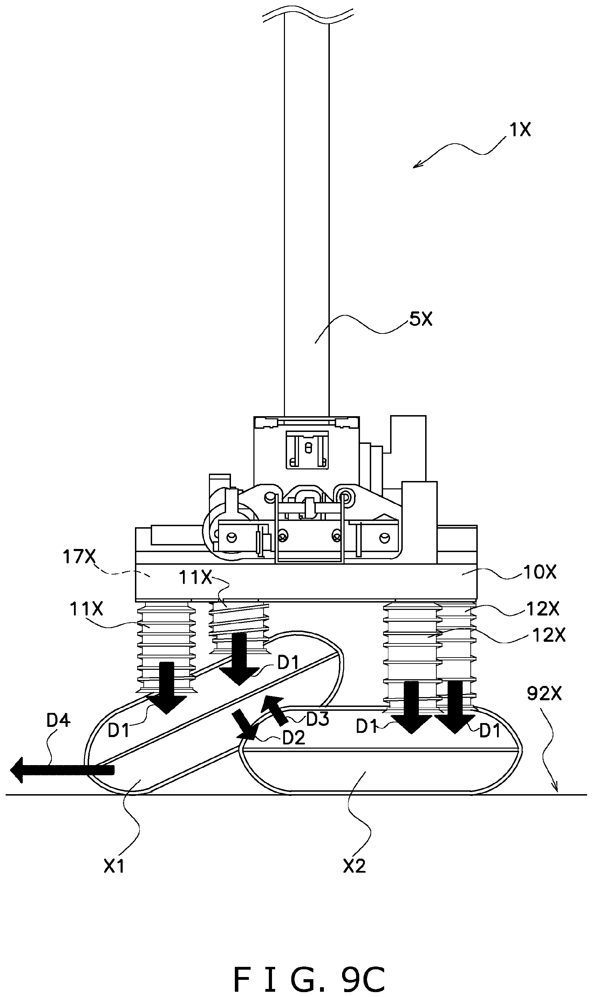

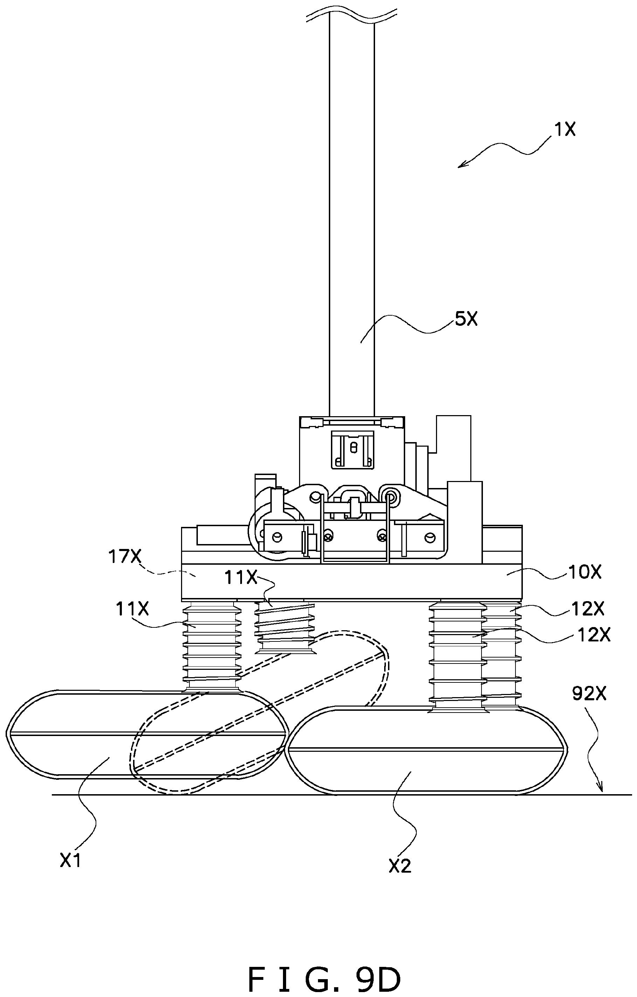

When the first product X1 and the second product X2 conveyed by the conveyor 92X reach the vertical direction underside of the suction and transport device 1X, as shown in FIG. 9A, the suction component 10X of the suction and transport device 1X moves downward in the vertical direction, and the first suction members 11X and the second suction members 12X abut the first product X1 and the second product X2 from above in the vertical direction. Because of this, pressure acts on the first product X1 and the second product X2 in the direction indicated by arrows D1 in FIG. 9A. Here, because the first product X1 and the second product X2 are products that lack flexibility, when the pressure acts in the direction of arrows D1, mutually repellent forces act between the first product X1 and the second product X2 (see arrow D2 and arrow D3 in FIG. 9B). Then, the first product X1 subjected to the pressure acting in the direction of arrows D1 from the first suction members 11X and subjected to the pressure acting in the direction of arrow D3 from the second product X2 tries to move in the direction of arrow D4 in FIG. 9C. As a result, as shown in FIG. 9D, the predetermined postures of the first product X1 and the second product X2 give way. If the first product X1 and the second product X2 are transported to the container in postures such as shown in FIG. 9D, it is conceivable that the first product X1 and/or the second product X2 will contact the inner surface of the container, and so there is the concern that proper box packing will not take place.

### (4-2) Case of Suction and Transport Device 1 including Support Members 30

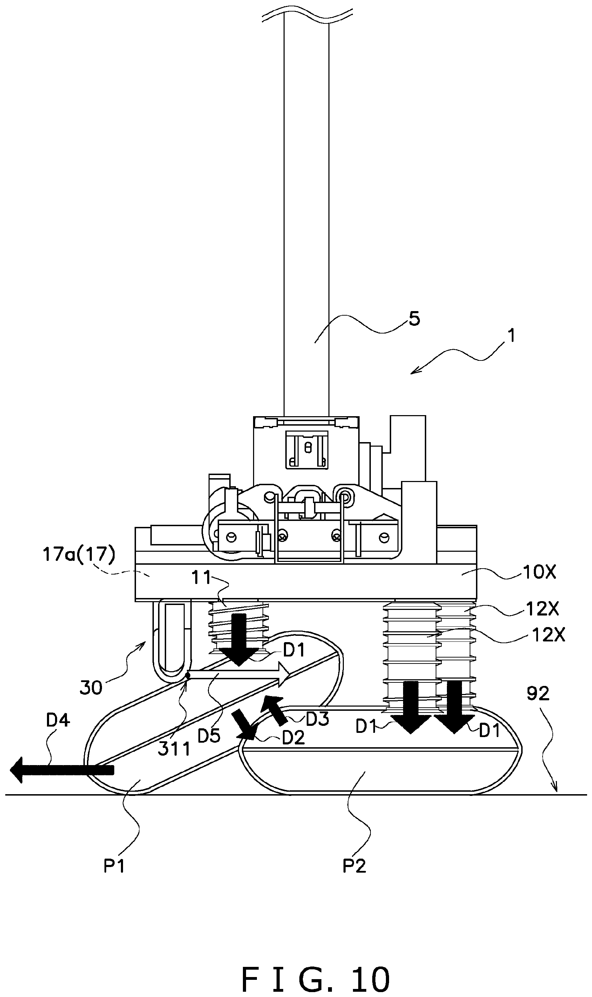

By contrast, in the suction and transport device 1 pertaining to the invention, as shown in FIG. 10, the abutting portion 311 of the support member 30 abuts the first product P1 trying to move in the direction of arrow D4. Because of this, a reaction force acts on the first product P1 in the direction indicated by arrow D5 in FIG. 10, and the first product P1 is inhibited from moving. In this way, in this invention, even if the first product P1 and the second product P2 are products that lack flexibility, the predetermined postures of the first product P1 and the second product P2 are maintained because the abutting portion 311 of the support member 30 abuts the first product P1. When the predetermined postures of the first product P1 and the second product P2 are maintained, the spacing between the first product P1 and the second product P2 is reduced, so the first product P1 and the second product P2 are inhibited from contacting the inner surface of the container C. In other words, the suction and transport device 1 can, even if the first product P1 and the second product P2 are products that lack flexibility, maintain the posture of the first product P1 in a preferred posture and carry out proper box packing.

### (4-3) Case of Suction and Transport Device 1X pertaining to Prior Art: Part 2

In the suction and transport device 1X, the following kind of situation is also conceivable as example of the concern that the suction and transport will be carried out in a state in which the predetermined postures of the plural products are not maintained.

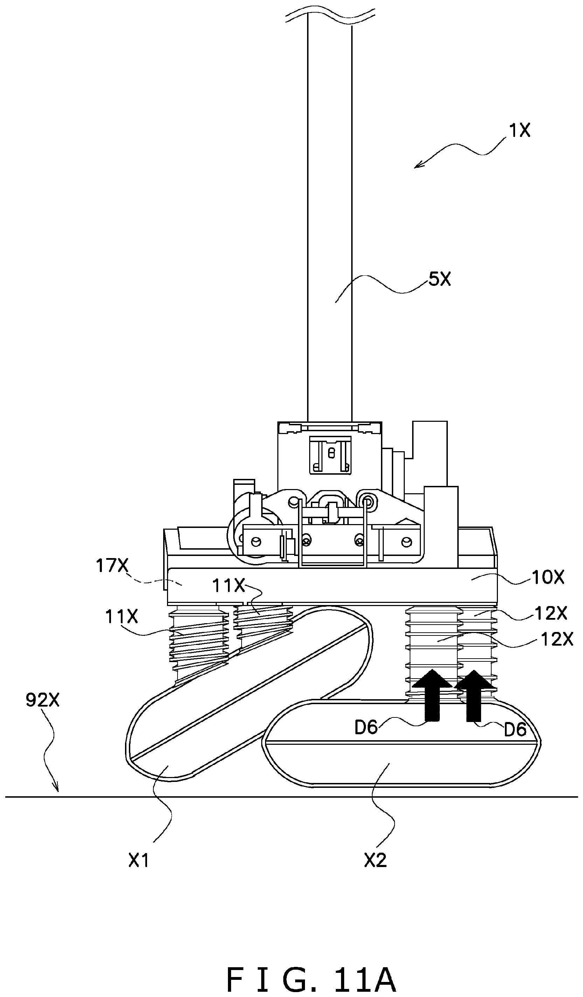

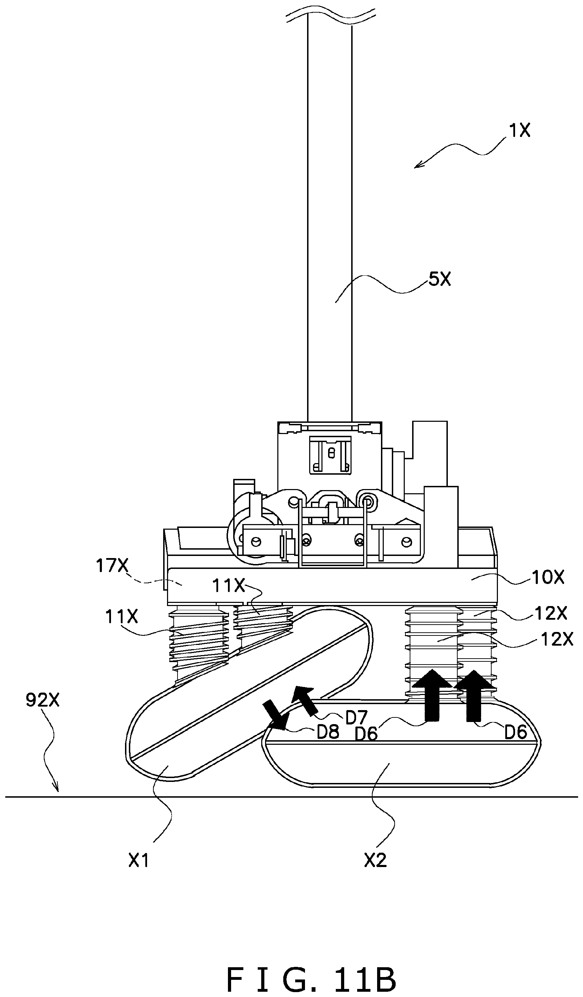

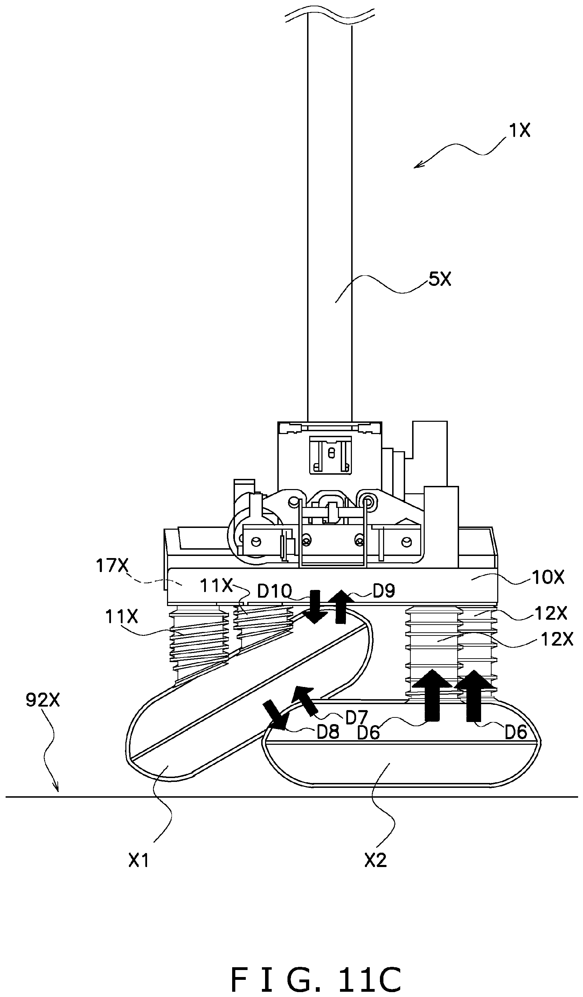

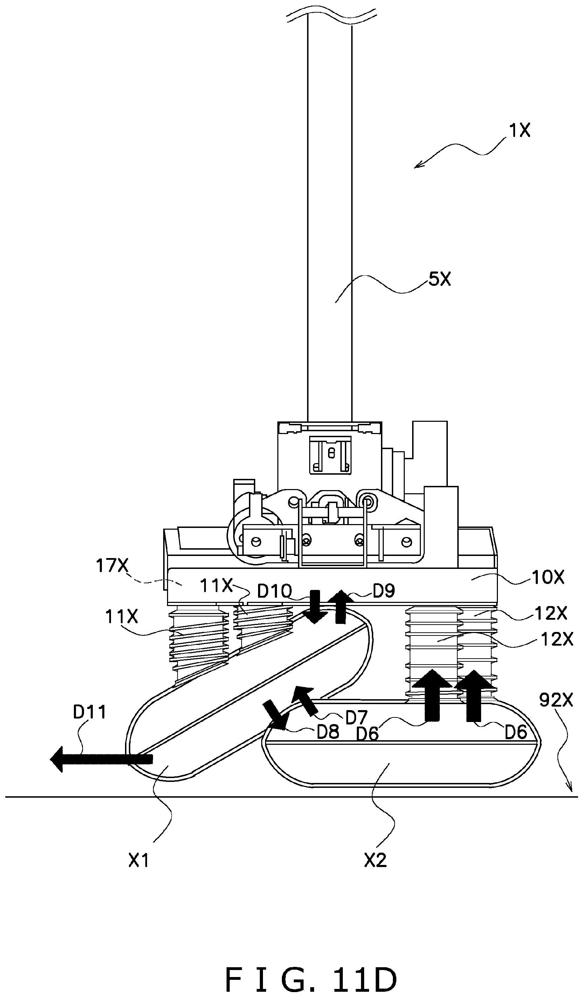

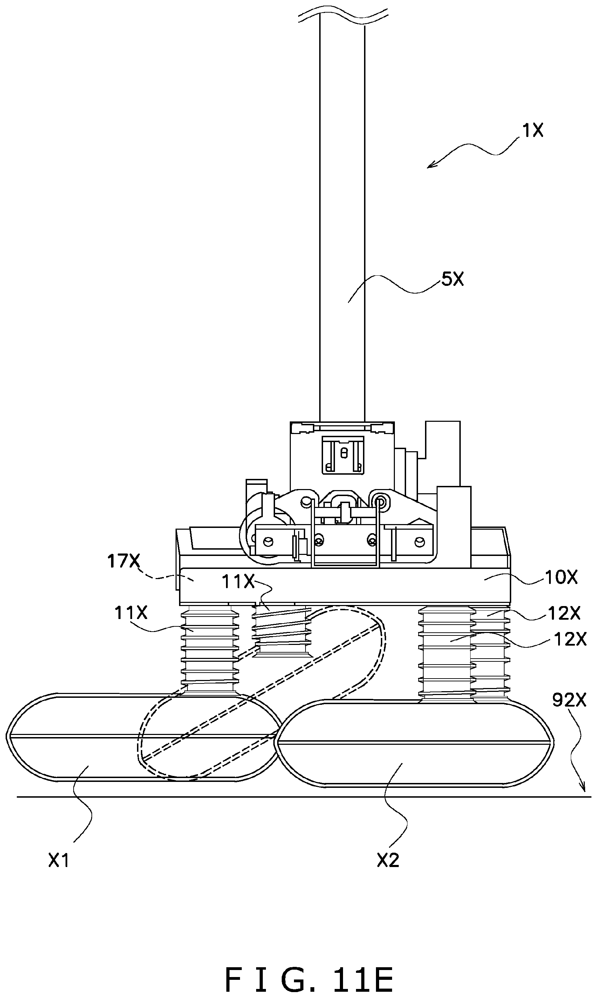

As shown in FIG. 11A, the second suction members 12X, by sucking the second product X2, pick up the second product X2 in the direction of arrows D6. Here, because the first product X1 and the second product X2 are products that lack flexibility, when the second suction members 12X try to pick up the second product X2 in the direction of arrows D6, mutually repellant forces act between the first product X1 and the second product X2 (see arrow D7 and arrow D8 in FIG. 11B). At this time, if space is not ensured between the first product X1 and the suction component 10X, the first product X1 abuts the suction component 10X, whereby mutually repellent forces act between the first product X1 and the suction component 10X (see arrow D9 and arrow D10 in FIG. 11C). The first product X1 subjected to the pressure acting in the direction of arrow D7 from the second product X2 and subjected to the pressure acting in the direction of arrow D10 from the suction component 10X tries to move in the direction of arrow D11 in FIG. 11D. As a result, as shown in FIG. 11E, the predetermined postures of the first product X1 and the second product X2 give way. If the first product X1 and the second product X2 are transported to the container in postures such as in FIG. 11E, it is conceivable that the first product X1 and/or the second product X2 will contact the inner surface of the container, and so there is the concern that proper box packing will not take place.

### (4-4) Case of Suction and Transport Device 1 including Support Members 30

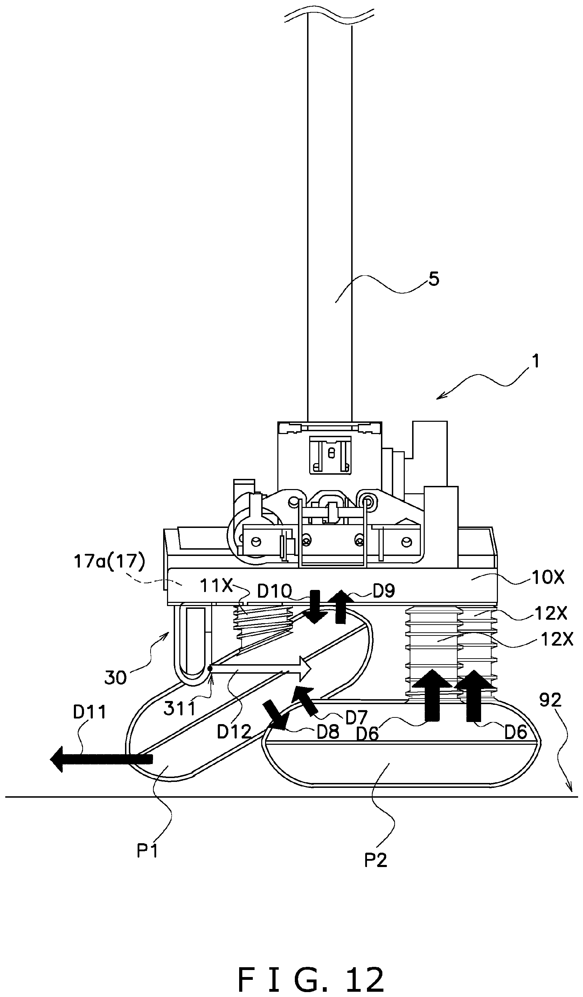

By contrast, in the suction and transport device 1 pertaining to the invention, as shown in FIG. 12, the abutting portion 311 of the support member 30 abuts the first product P1 trying to move in the direction of arrow D11. Because of this, a reaction force acts on the first product P1 in the direction indicated by arrow D12 in FIG. 12, and the first product P1 is inhibited from moving. In this way, in this invention, even if the first product P1 and the second product P2 are products that lack flexibility, the predetermined postures of the first product P1 and the second product P2 are maintained because the abutting portion 311 of the support member 30 abuts the first product P1. When the predetermined postures of the first product P1 and the second product P2 are maintained, the spacing between the first product P1 and the second product P2 is reduced, so the first product P1 and the second product P2 are inhibited from contacting the inner surface of the container C. In other words, the suction and transport device 1 can, even if the first product P1 and the second product P2 are products that lack flexibility, maintain the posture of the first product P1 in a preferred posture and carry out proper box packing.

### (5) Characteristics

(5-1)
The suction and transport device 1 sucks and transports the first products P1, and includes the first suction members 11 and the support members 30. The first suction members 11 each have one end that is joined to the suction component 10 connected to the vacuum source 15 and another end that serves as the sucking portion 111 that sucks the first products P1. The support members 30 have the abutting portions 311 that abut the first products P1. When the sucking portions 111 are sucking the first products P1 and the abutting portions 311 are abutting the first products P1, the height of the sucking portions 111 is higher than the height of the abutting portions 311 in the vertical direction.

In the suction and transport device 1 pertaining to the embodiment, the suction and transport device 1 includes the support members 30, and the abutting portions 311 of the support members 30 abut the first products P1. Furthermore, when the sucking portions 111 are sucking the first products P1 and the abutting portions 311 are abutting the first products P1, the height of the sucking portions 111 is higher than the height of the abutting portions 311 in the vertical direction. Because of this, when the suction and transport device 1 sucks and transports plural products, the posture of the first products P1 being sucked by the sucking portions 111 of the first suction members 11 can be kept in a preferred posture.

(5-2)
In the suction and transport device 1, the height of the sucking portions 111 when the sucking portions 111 are not sucking the first products P1 is a height equal to or greater than the height of the abutting portions 311 in the vertical direction.

In a case where the height of the sucking portions 111 is lower than the height of the abutting portions 311 in the vertical direction when the sucking portions 111 are not sucking the first products P1, the height of the sucking portions 111 will not always be higher than the height of the abutting portions 311 in the vertical direction when the sucking portions 111 are sucking the first products P1 and the abutting portions 311 are abutting the first products P1.

In the suction and transport device 1 pertaining to the embodiment, the height of the sucking portions 111 when the sucking portions 111 are not sucking the first products P1 is a height equal to or greater than the height of the abutting portions 311 in the vertical direction. Because of this, when the suction and transport device 1 sucks and transports plural products, the posture of the first products P1 being sucked by the sucking portions 111 of the first suction members 11 can be kept in a preferred posture.

(5-3)
The suction and transport device 1 further includes the position adjusting portions 35 that change the height of the abutting portions 311.

The abutting portions 311, by abutting the first products P1, keep stable the posture of the first products P1 being sucked by the sucking portions 111. At this time, depending on the height of the abutting portions 311 in the vertical direction, there is the concern that the first products P1 will sustain damage, so it is preferred that the height of the abutting portions 311 in the vertical direction be appropriately adjustable.

In the suction and transport device 1 pertaining to the embodiment, the suction and transport device 1 further includes the position adjusting portions 35 that change the height of the abutting portions 311. Because of this, the height of the abutting portions 311 in the vertical direction can be adjusted in accordance with the posture and shape of the first products P1, so damage to the first products P1 can be inhibited.

(5-4)
In the suction and transport device 1, the support members 30 are relocatable in a range in which the first products P1 can abut them.

The abutting portions 311 of the support members 30, by abutting the first products P1, keep stable the posture of the first products P1 being sucked by the sucking portions 111. At this time, depending on the position at which the support members 30 are joined to the suction component 10, there is the concern that the first products P1 will sustain damage, so it is preferred that the position of the support members 30 be appropriately adjustable.

In the suction and transport device 1 pertaining to the embodiment, the support members 30 are relocatable in a range in which the first products P1 can abut them.
Because of this, the position of the support members 30 can be adjusted in accordance with the posture and shape of the first products P1, so damage to the first products P1 can be inhibited.

(5-5)
In the suction and transport device 1, the abutting portions 311 elastically deform when they abut the first products P1.

The abutting portions 311, by abutting the first products P1, keep stable the posture of the first products P1 being sucked by the sucking portions 111. For this reason, depending on the material of the abutting portions 311, there is the concern that the first products P1 will sustain damage.

In the suction and transport device 1 pertaining to the embodiment, the abutting portions 311 elastically deform when they abut the first products P1. Because of this, when the abutting portions 311 abut the first products P1, damage to the first products P1 can be inhibited.

(5-6)
In the suction and transport device 1, the abutting portions 311 are elastic members made of rubber or made of Bancollan.

The abutting portions 311, by abutting the first products P1, keep stable the posture of the first products P1 being sucked by the sucking portions 111. For this reason, depending on the material of the abutting portions 311, there is the concern that the first products P1 will sustain damage.

In the suction and transport device 1 pertaining to the embodiment, the abutting portions 311 are elastic members made of rubber or made of Bancollan. Because of this, the abutting portions 311 have elasticity and flexibility, so when they abut the first products P1, damage to the first products P1 can be inhibited.

Furthermore, because the abutting portions 311 are made of rubber or made of Bancollan, a reduction in the weight of the suction component 10 overall is realized.

(5-7)
In the suction and transport device 1, the area of the abutting portions 311 is larger than the area of the sucking portions 111.

In the suction and transport device 1 pertaining to the embodiment, the area of the abutting portions 311 is larger than the area of the sucking portions 111. Because of this, when the suction and transport device 1 sucks and transports plural products, the posture of the first products P1 being sucked by the sucking portions 111 of the first suction members 11 can be kept in a preferred posture.

(5-8)
In the suction and transport device 1, the support members 30 do not suck and hold the first products P1.

In the suction and transport device 1 pertaining to the embodiment, the support members 30 do not suck and hold the first products P1. In other words, the support members 30 do not have a mechanism for sucking and holding the first products P1. Because of this, an increase in the cost of the suction and transport device 1 including the support members 30 can be inhibited.

(5-9)
The suction and transport device 1 further includes the second suction members 12 each having one end that is joined to the suction component 10 and another end that sucks the second products P2. Before the sucking portions 111 of the first suction members 11 and the another ends of the second suction members 12 suck the first products P1 and the second products P2, the first products P1 and the second products P2 are in contact with each other in mutually different postures.

The suction and transport device 1 pertaining to the embodiment further includes the second suction members 12 each having one end that is joined to the suction component 10 and another end that sucks the second products P2. Furthermore, before the sucking portions 111 of the first suction members 11 and the another ends of the second suction members 12 suck the first products P1 and the second products P2, the first products P1 and the second products P2 are in contact with each other in mutually different postures. Because of this, even in a case where the suction and transport device 1 sucks and transports the first products P1 and the second products P2, the posture of the first products P1 being sucked by the sucking portions 111 of the first suction members 11 can be kept in a preferred posture.

(5-10)
The suction and transport device 1 transports the first products P1 and the second products P2 to the container C.

In the embodiment, the container C is, for example, a cardboard case or a returnable container. When the suction and transport device 1 performs the transport to the container C in a state in which the predetermined postures of the first products P1 and the second products P2 have given way, it is conceivable that the first products P1 and/or the second products P2 will contact the inner surface of the container C, and so there arises the concern that proper box packing will not take place. For example, there arises the concern that, as a result of the first products P1 and/or the second products P2 contacting the inner surface of the container C, parts of the first products P1 and/or the second products P2 will overflow the container C, thus obstructing the folding of the lid of the container C or the closing and sealing of the lid of the container C.

The suction and transport device 1 pertaining to the embodiment transports the first products P1 and the second products P2 to the container C while maintaining the preferred postures of the first products P1 and the second products P2. Because of this, the spacing between the first products P1 and the second products P2 is reduced, so the first products P1 and the second products P2 are inhibited from contacting the inner surface of the container C, and proper box packing can be carried out.

### (6) Example Modifications

The above embodiment is appropriately modifiable as indicated in the following example modifications. Each of the example modifications may also be combined with another example modification and applied to the extent that they are not incompatible. It will be noted regarding configurations that are the same as those in the above embodiment that the same reference signs are assigned thereto and detailed description thereof is omitted.

### (6-1) Example Modification A

In the above embodiment, the abutment members 31 were described as being substantially J-shaped or substantially U-shaped in side view. However, the shape of the abutment members 31 is not limited to this, and the abutment members 31 may also be S-shaped for example. Even in such a case as this, it is preferred that the area of the abutting portions 311 be larger than the area of the sucking portions 111.

### (6-2) Example Modification B

In the above embodiment, an example was described where the suction component 10 comprises two suction components, the first suction component 10a and the second suction component 10b. However, the configuration of the suction component 10 is not limited to this, and the suction component 10 may also comprise more or fewer suction components.

### (6-3) Example Modification C

In the above embodiment, the row R was described as comprising the first product P1 and the second product P2, and the product group G was described as comprising two rows R. However, the configuration of the product group G is not limited to this, and the product group G may also comprise more or fewer rows R. In other words, the quantities of the first product P1 and the second product P2 configuring the product group G are not limited to the above quantities.

It will be noted that, as described above, the quantities, shape, and material of the first suction members 11 and the second suction members 12 may be appropriately changed in accordance with the quantities, shape, material, and postures of the first products P1 and the second products P2, so in this example modification, the quantities of the first suction members 11 and the second suction members 12 are appropriately selected in accordance with the quantities of the first product P1 and the second product P2 configuring the product group G.

### (6-4) Example Modification D

In the above embodiment, the first product P1 and the second product P2 were described as products to which a paper lamination has been applied. However, the suction and transport device 1 in this invention is applicable to not only products to which a paper lamination has been applied but also bag-like objects that have been packaged in a soft packaging material such as plastic film.

### REFERENCE SIGNS LIST

- 1, 1a: Suction and Transport Devices
- 10a: First Suction Component (Suction Component)
- 10b: Second Suction Component (Suction Component)
- 11: First Suction Members
- 12: Second Suction Members
- 30: Support Members
- 35: Position Adjusting Portions
- 111: Sucking Portions
- 311: Abutting Portions
- P1: First Products
- P2: Second Products

### CITATION LIST

### PATENT LITERATURE

Patent Document 1: JP-A No. 2018-89732

## Claims

1. A suction and transport device (1, 1a) for sucking and transporting a first product (P1), the suction and transport device (1, 1a) comprising:
a suction component (10a, 10b) connected to a vacuum source; and
a first suction member (11) having one end that is joined to the suction component (10a, 10b) and another end that serves as a sucking portion (111) for sucking the first product (P1),
a support member (30) having an abutting portion (311);
wherein when the sucking portion (111) is sucking the first product (P1) and the abutting portion (311) is abutting the first product, the height of the sucking portion (111) is higher than the height of the abutting portion (311) in the vertical direction, **characterized in that** the abutting portion (311) is suitable for abutting the first product (P1) from the upper surface of the first product (P1), wherein the support member (30) is coupled to the suction component (10a, 10b).

2. The suction and transport device (1, 1a) of claim 1, wherein the height of the sucking portion (111) when the sucking portion (111) is not sucking the first product (P1) is a height equal to or greater than the height of the abutting portion (311) in the vertical direction.

3. The suction and transport device (1, 1a) of claim 1 or 2, further comprising a position adjusting portion (35) for changing the height of the abutting portion (311).

4. The suction and transport device (1, 1a) of any of claims 1 to 3, wherein the support member (30) is relocatable in a range in which the first product (P1) can abut it.

5. The suction and transport device (1, 1a) of any of claims 1 to 4, wherein the abutting portion (311) being suitable for elastically deforming when it abuts the first product (P1).

6. The suction and transport device (1, 1a) of any of claims 1 to 5, wherein the abutting portion (311) is an elastic member made of rubber or made of Bancollan.

7. The suction and transport device (1, 1a) of any of claims 1 to 6, wherein the area of the abutting portion (311) is larger than the area of the sucking portion.

8. The suction and transport device (1, 1a) of any of claims 1 to 7, wherein the support member (30) not being configured to suck and hold the first product (P1).

9. The suction and transport device (1, 1a) of any of claims 1 to 8, further comprising a second suction member (12) having one end that is joined to the suction component (10a, 10b) and another end for sucking a second product (P2), wherein before the sucking portion (111) of the first suction member (111) and the another end of the second suction member (12) suck the first product (P1) and the second product (P2), the first product (P1) and the second product (P2) are in contact with each other in mutually different postures.

10. The suction and transport device (1, 1a) of claim 9, wherein the suction and transport device (1, 1a) being suitable for transporting the first product (P1) and the second product (P2) to a container (C).

## Patentansprüche

1. Saug- und Transportvorrichtung (1, 1a) zum Saugen und Transportieren eines ersten Produkts (P1), wobei die Saug- und Transportvorrichtung (1, 1a) umfasst:
eine Saugkomponente (10a, 10b), die mit einer Vakuumquelle verbunden ist; und
ein erstes Saugelement (11) mit einem Ende, das mit der Saugkomponente (10a, 10b) verbunden ist, und einem anderen Ende, das als ein Saugabschnitt (111) zum Saugen des ersten Produkts (P1) dient,
ein Stützelement (30) mit einem Anlageabschnitt (311);
wobei, wenn der Saugabschnitt (111) das erste Produkt (P1) saugt und der Anlageabschnitt (311) an dem ersten Produkt anliegt, die Höhe des Saugabschnitts (111) höher ist als die Höhe des Anlageabschnitts (311) in der vertikalen Richtung, **dadurch gekennzeichnet, dass** der Anlageabschnitt (311) geeignet ist, an dem ersten Produkt (P1) von der oberen Oberfläche des ersten Produkts (P1) anzuliegen, wobei das Stützelement (30) mit der Saugkomponente (10a, 10b) gekoppelt ist.

2. Saug- und Transportvorrichtung (1, 1a) nach Anspruch 1, wobei die Höhe des Saugabschnitts (111), wenn der Saugabschnitt (111) das erste Produkt (P1) nicht saugt, eine Höhe gleich oder größer als die Höhe des Anlageabschnitts (311) in der vertikalen Richtung ist.

3. Saug- und Transportvorrichtung (1, 1a) nach Anspruch 1 oder 2, ferner umfassend einen Positionseinstellabschnitt (35) zum Ändern der Höhe des Anlageabschnitts (311).

4. Saug- und Transportvorrichtung (1, 1a) nach einem der Ansprüche 1 bis 3, wobei das Stützelement (30) in einem Bereich verlagerbar ist, in dem das erste Produkt (P1) daran anliegen kann.

5. Saug- und Transportvorrichtung (1, 1a) nach einem der Ansprüche 1 bis 4, wobei der Anlageabschnitt (311) geeignet ist, sich elastisch zu verformen, wenn er an dem ersten Produkt (P1) anliegt.

6. Saug- und Transportvorrichtung (1, 1a) nach einem der Ansprüche 1 bis 5, wobei der Anlageabschnitt (311) ein elastisches Element aus Gummi oder aus Bancollan ist.

7. Saug- und Transportvorrichtung (1, 1a) nach einem der Ansprüche 1 bis 6, wobei die Fläche des Anlageabschnitts (311) größer als die Fläche des Saugabschnitts ist.

8. Saug- und Transportvorrichtung (1, 1a) nach einem der Ansprüche 1 bis 7, wobei das Stützelement (30) nicht konfiguriert ist, das erste Produkt (P1) zu saugen und zu halten.

9. Saug- und Transportvorrichtung (1, 1a) nach einem der Ansprüche 1 bis 8, ferner umfassend ein zweites Saugelement (12) mit einem Ende, das mit der Saugkomponente (10a, 10b) verbunden ist, und einem anderen Ende zum Saugen eines zweiten Produkts (P2), wobei, bevor der Saugabschnitt (111) des ersten Saugelements (111) und das andere Ende des zweiten Saugelements (12) das erste Produkt (P1) und das zweite Produkt (P2) saugen, das erste Produkt (P1) und das zweite Produkt (P2) in gegenseitig unterschiedlichen Stellungen miteinander in Kontakt sind.

10. Saug- und Transportvorrichtung (1, 1a) nach Anspruch 9, wobei die Saug- und Transportvorrichtung (1, 1a) geeignet ist, das erste Produkt (P1) und das zweite Produkt (P2) zu einem Behälter (C) zu transportieren.

## Revendications

1. Un dispositif d'aspiration et de transport (1, 1a) pour aspirer et transporter un premier produit (P1), le dispositif d'aspiration et de transport (1, 1a) comprenant :
un composant d'aspiration (10a, 10b) relié à une source de vide ; et
un premier organe d'aspiration (11) possédant une extrémité qui est reliée au composant d'aspiration (10a, 10b) et une autre extrémité qui sert de partie d'aspiration (111) pour aspirer le premier produit (P1) ;
un organe support (30) possédant une partie de venue en butée (311) ;
dans lequel, lorsque la partie d'aspiration (111) aspire le premier produit (P1) et la partie de venue en butée (311) vient en butée contre le premier produit, la hauteur de la partie d'aspiration (111) est supérieure à la hauteur de la partie de venue en butée (311) dans la direction verticale,
**caractérisé en ce que** la partie de venue en butée (311) permet de venir en butée contre le premier produit (P1) depuis la surface supérieure du premier produit (P1), l'organe support (30) étant couplé au composant d'aspiration (10a, 10b).

2. Le dispositif d'aspiration et de transport (1, 1a) de la revendication 1, dans lequel la hauteur de la partie d'aspiration (111), lorsque la partie d'aspiration (111) n'aspire pas le premier produit (P1), est une hauteur égale ou supérieure à la hauteur de la partie de venue en butée (311) dans la direction verticale.

3. Le dispositif d'aspiration et de transport (1, 1a) de la revendication 1 ou 2, comprenant en outre une partie d'ajustement de position (35) pour modifier la hauteur de la partie de venue en butée (311).

4. Le dispositif d'aspiration et de transport (1, 1a) de l'une des revendications 1 à 3, dans lequel l'organe support (30) est repositionnable sur une étendue dans laquelle le premier produit (P1) peut venir en butée contre lui.

5. Le dispositif d'aspiration et de transport (1, 1a) de l'une des revendications 1 à 4, dans lequel la partie de venue en butée (311) est capable de se déformer élastiquement lorsqu'elle vient en butée contre le premier produit (P1).

6. Le dispositif d'aspiration et de transport (1, 1a) de l'une des revendications 1 à 5, dans lequel la partie de venue en butée (311) est un organe élastique réalisé en caoutchouc ou réalisé en Bancollan.

7. Le dispositif d'aspiration et de transport (1, 1a) de l'une des revendications 1 à 6, dans lequel l'étendue de la partie de venue en butée (311) est supérieure à l'étendue de la partie d'aspiration.

8. Le dispositif d'aspiration et de transport (1, 1a) de l'une des revendications 1 à 7, dans lequel l'organe support (30) n'est pas configuré pour aspirer et maintenir le premier produit (P1).

9. Le dispositif d'aspiration et de transport (1, 1a) de l'une des revendications 1 à 8, comprenant en outre un second organe d'aspiration (12) possédant une extrémité qui est reliée au composant d'aspiration (10a, 10b) et une autre extrémité pour aspirer un second produit (P2), dans lequel, avant que la partie d'aspiration (111) du premier organe d'aspiration (11) et l'autre extrémité du second organe d'aspiration (112) n'aspirent le premier produit (P1) et le second produit (P2), le premier produit (P1) et le second produit (P2) sont en contact l'un avec l'autre dans différentes postures mutuelles.

10. Le dispositif d'aspiration et de transport (1, 1a) de la revendication 9, dans lequel le dispositif de transport et d'aspiration (1, 1a) est capable de transporter le premier produit (P1) et le second produit (P2) jusqu'à un conteneur (C).
